# EUROPÄISCHE PATENTSCHRIFT

(11) **EP 4 007 514 B1**
(45) Veröffentlichungstag und Bekanntmachung des Hinweises auf die Patenterteilung: **01.03.2023**
(21) Anmeldenummer: 20736609.7
(22) Anmeldetag: 29.06.2020
(51) Int. Cl.: A47J 27/08, A47J 27/09

(54) **VERSCHLUSSVORRICHTUNG FÜR EINEN DRUCKBEHÄLTER, DRUCKBEHÄLTER UND VERWENDUNG DER VERSCHLUSSVORRICHTUNG**
CLOSURE APPARATUS FOR A PRESSURE VESSEL, PRESSURE VESSEL AND USE OF THE CLOSURE APPARATUS
APPAREIL DE FERMETURE POUR UN RÉCIPIENT SOUS PRESSION, RÉCIPIENT SOUS PRESSION ET UTILISATION DE L'APPAREIL DE FERMETURE

(30) Priorität: 02.08.2019 DE 102019211660
(43) Veröffentlichungstag der Anmeldung: 08.06.2022
(73) Patentinhaber: WMF GmbH, 73312 Geislingen/Steige (DE)
(72) Erfinder: MORMONE, Maria, 73329 Kuchen (DE); REINHARD, Dieter, 73326 Deggingen (DE)
(74) Vertreter: Pfenning, Meinig & Partner mbB
(86) Internationale Anmeldenummer: PCT/EP2020/068248
(87) Internationale Veröffentlichungsnummer: WO 2021/023439

(56) Entgegenhaltungen:
- CN-A- 109 157 127
- US-A- 2 614 723

## Beschreibung

Es wird eine Verschlussvorrichtung für einen Druckbehälter (z.B. für einen Schnellkochtopf) bereitgestellt, die für den Benutzer ein größeres Maß an Sicherheit bietet, insbesondere wesentlichen Sicherheitsanforderungen aus dem Anhang I der Richtlinie 2014/68/EU entspricht. Die Verschlussvorrichtung ist mit einer Sperre ausgerüstet, die ein Öffnen des Druckbehälters bei einem Innendruck von ≥ 4 kPa auch im Falle eines auf die Verschlussvorrichtung in Richtung Druckbehälter ausgeübten Gegendrucks verhindert. Die Verschlussvorrichtung weist hierfür einen Außenkörper auf, einen Zentralkörper der Verschlussvorrichtung umgibt und beweglich mit diesem verbunden ist. Entlang einer Zylinderachse des Außenkörpers weist der Außenkörper einen bestimmten Abstand (x) zum Zentralkörper auf und Verriegelungsarme des Zentralkörpers sind durch Aussparungen im Außenkörper mindestens um den bestimmten Abstand (x) entlang der Zylinderachse des Außenkörpers beweglich.

In der Richtlinie 2014/68/EU wird in Anhang I "Wesentliche Sicherheitsanforderungen" für Druckbehälter unter Abschnitt 2.3 "Vorkehrungen für die Sicherheit in Handhabung und Betrieb" unter anderem auf die Beschaffenheit der Bedienungseinrichtung hingewiesen. Unter anderem wird auf "Vorrichtungen zur Verhinderung des physischen Zugangs bei Überdruck oder Vakuum im Gerät" hingewiesen. Weiterhin ist zu den Anforderungen an einen Druckbehälter mit abnehmbarer Verschlussvorrichtung notiert: "Lässt sich die Vorrichtung schnell betätigen, so muss das Druckgerät außerdem mit einer Sperre ausgerüstet sein, die ein Öffnen verhindert, solange der Druck oder die Temperatur des Fluids ein Risiko darstellt.". In der DIN EN 12778 wird dieses Risiko durch den Druckwert ≥4 kPa näher spezifiziert.

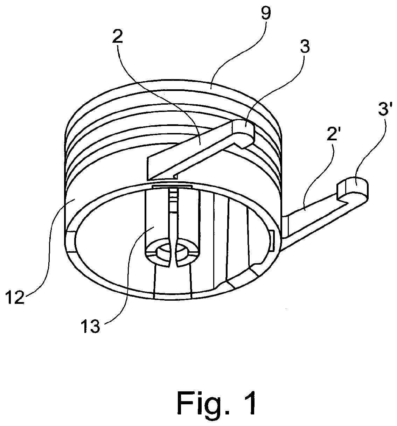

Es sind im Stand der Technik Druckbehälter mit abnehmbarer Verschlussvorrichtung bekannt, die diesen Sicherheitsanforderungen nicht gerecht werden. In solchen Druckbehältern aus dem Stand der Technik ist die verbaute Restdrucksicherung als ein Verrieglungsarm mit Verrieglungshaken ausgestaltet und direkt an die Kochanzeige gekoppelt (siehe Figur 1). Solange ein Restdruck von ≥4 kPa im Schnellkochtopf anliegt, wird dies durch die Kochanzeige visualisiert und gleichzeitig mechanisch verriegelt. Es kann bei solchen Druckbehältern jedoch nicht ausgeschlossen werden, dass durch ein gezieltes Herunterdrücken der Kochanzeige ein Manipulieren der Restdrucksicherung stattfindet und somit die mechanische Verriegelung auch für Drücke ≥4 kPa aufgehoben wird, was auch bei einem Restdruck von ≥4 kPa im Druckbehälter ein Öffnen des Druckbehälters ermöglicht.

Die CN 109 157 127 A offenbart ein Dampfventil und ein Kochgerät mit dem Dampfventil. Das Dampfventil umfasst einen Dampfventildeckel, der mit einem Lufteinlass zum Einströmen von Dampf und einem Luftauslass zum Ausströmen des Dampfes versehen ist, und eine Ventileinsatzbaugruppe, die im Inneren des Dampfventildeckels angeordnet ist.

Ausgehend hiervon war es die Aufgabe der vorliegenden Erfindung, eine Verschlussvorrichtung für einen Druckbehälter bereitzustellen, welche die im Stand der Technik beobachteten Nachteile nicht mehr aufweist, d.h. welcher auch bei einem Restdruck von ≥4 kPa im Druckbehälter sicherstellt, dass der Druckbehälter verschlossen bleibt, d.h. nicht mehr über eine Manipulation der Restdrucksicherung geöffnet werden kann. Ferner sollte ein Druckbehälter bereitgestellt werden, der sich nicht mehr über eine Manipulation der Restdrucksicherung bei einem Restdruck von 4 kPa im Druckbehälter öffnen lässt. Zudem sollten Verwendungen der Verschlussvorrichtung angegeben werden.

Die Aufgabe wird gelöst durch die Verschlussvorrichtung mit den Merkmalen von Anspruch 1, den Druckbehälter mit den Merkmalen von Anspruch 9 und die Verwendung der Verschlussvorrichtung gemäß Anspruch 15. Die abhängigen Ansprüche zeigen vorteilhafte Weiterbildungen auf.

Erfindungsgemäß wird eine Verschlussvorrichtung für einen Druckbehälter bereitgestellt, enthaltend
a) einen im wesentlichen zylindrischen Zentralkörper, der entlang einer Zylinderachse des Zentralkörpers eine bestimmte Höhe aufweist und an einer nach außen gerichteten Oberfläche zwei Verriegelungsarme aufweist, die jeweils einen Verriegelungshaken enthalten; und
b) einen im wesentlich zylindrischen Innenkörper, der mit dem Zentralkörper verbunden ist, zumindest bereichsweise innerhalb des Zentralkörpers angeordnet ist und dazu geeignet ist, auf eine Öffnung eines Druckbehälters aufgebracht zu werden.

Die erfindungsgemäße Verschlussvorrichtung ist dadurch gekennzeichnet, dass sie einen im wesentlichen zylindrischen Außenkörper enthält, wobei der Außenkörper zumindest bereichsweise außerhalb des Zentralkörpers angeordnet ist, der Außenkörper mit dem Zentralkörper beweglich verbunden ist, sodass der Zentralkörper innerhalb des Außenkörpers in Richtung einer Zylinderachse des Außenkörpers beweglich ist, der Außenkörper Aussparungen aufweist, durch welche die Verriegelungsarme vom Zentralkörper durch den Außenkörper nach außen ragen, und der Außenkörper in Richtung einer Zylinderachse des Außenkörpers einen bestimmten Abstand (x) zum Zentralkörper aufweist und die Verriegelungsarme in Richtung der Zylinderachse des Außenkörpers mindestens diesen bestimmten Abstand (x) zu einem Ende der Aussparungen aufweisen.

Der entscheidende Vorteil der erfindungsgemäßen Verschlussvorrichtung ist, dass ein mit der Verschlussvorrichtung verschlossener Druckbehälter bei einem Innendruck von ≥4 kPa verschlossen bleibt, d.h. nicht mehr über eine Manipulation der Restdrucksicherung (z.B. über ein mechanisches Drücken der Verschlussvorrichtung in Richtung Druckbehältergegen den Innendruck von ≥4 kPa geöffnet werden kann. Ein über die Verschlussvorrichtung an den Benutzer des Druckbehälters (optisch) ausgegebenes Kochsignal ist somit von der über die Verschlussvorrichtung bereitgestellte Restdrucksicherung entkoppelt. Damit ist sichergestellt, dass bei gleichzeitigem Herunterdrücken des (optischen) Kochsignals der Verschlussvorrichtung und Vorhandensein eines Drucks >_4 kPa im inneren des Druckbehälters (z.B. eines Schnellkochtopfes) kein Entriegeln bzw. Öffnen des Druckbehälters möglich ist.

In einer vorteilhaften Ausgestaltungsform entspricht der Abstand x (= Abstand vom Außenkörper zum Innenkörper in Richtung einer Zylinderachse des Außenkörpers) einer Dehnungsstrecke einer Feder eines Druckbehälters bei einem bestimmten Innendruck des Druckbehälters, bevorzugt einer Dehnungsstrecke einer Feder eines Druckbehälters bei einem Innendruck des Druckbehälters im Bereich von > 0 kPa bis < 4 kPa.

Der Abstand x kann einem Wert im Bereich von 1 mm bis 6 mm, bevorzugt 1,5 mm bis 5 mm, besonders bevorzugt 2 mm bis 4 mm, insbesondere 3 mm, entsprechen.

Der Zentralkörper der Verschlussvorrichtung kann einstückig mit dem Innenkörper ausgebildet sein.

Ferner kann der Zentralkörper der Verschlussvorrichtung über eine Steckverbindung in den Außenkörper eingesteckt sein.

In einer bevorzugten Ausgestaltungsform weist der Außenkörper, in Richtung einer Zylinderachse des Außenkörpers, eine Höhe auf, die mindestens 2 mm, bevorzugt mindestens 3 mm, größer ist als die Höhe des Zentralkörpers in diese Richtung.

In einer weiteren bevorzugten Ausgestaltungsform weisen die Aussparungen des Außenkörpers, in Richtung einer Zylinderachse des Außenkörpers, eine Höhe auf, die mindestens 2 mm, bevorzugt mindestens 3 mm, größer ist als die Höhe der Verriegelungsarme in diese Richtung.

Die zwei Verriegelungsarme des Zentralkörpers können einstückig mit dem Zentralkörper sein.

Zudem können die zwei Verriegelungsarme des Zentralkörpers jeweils einstückig mit den Verriegelungshaken sein.

In einer bevorzugten Ausgestaltungsform weist der Außenkörper eine Kochanzeige auf.

Der im wesentlichen zylindrische Zentralkörper kann einen Durchmesser im Bereich von von 20 bis 35 cm, bevorzugt von 26 bis 28 cm, aufweisen.

Der im wesentlichen zylindrische Innenkörper kann einen Durchmesser im Bereich von 5 bis 11 cm, bevorzugt von 7 bis 9 cm, aufweisen.

Der im wesentlichen zylindrische Außenkörper kann einen Durchmesser im Bereich von 30 bis 45 cm, bevorzugt von 32 bis 36 cm, aufweisen.

Ferner wird erfindungsgemäß ein Druckbehälter, bevorzugt ein Druckkochtopf, bereitgestellt, der eine erfindungsgemäße Verschlussvorrichtung enthält.

Die erfindungsgemäße Verschlussvorrichtung kann auf den Druckbehälter aufgebracht sein. Bevorzugt ist die erfindungsgemäße Verschlussvorrichtung über den Innenkörper der Verschlussvorrichtung auf den Druckbehälter aufgebracht.

Der Druckbehälter kann dadurch gekennzeichnet sein, dass er einen oder mehrere Ventilheber mit jeweils mindestens einer Anschlagskante aufweist. Die Anschlagskante(n) kann/können so ausgestaltet sein, dass sie bei einem Druck von ≥ 4 kPa im Inneren des Druckbehälters, und einem gleichzeitigen, entsprechenden Gegendruck von ≥ 4 kPa auf den Außenkörper der Verschlussvorrichtung, in die Verriegelungshaken der Verriegelungsarme der Verschlussvorrichtung eingreift/eingreifen. Ferner kann/können die Anschlagskante(n) so ausgestaltet sein, dass sie bei einem Druck von < 4 kPa im Inneren des Druckbehälters, und optional einem gleichzeitigen, entsprechenden Gegendruck von ≥4 kPa auf den Außenkörper der Verschlussvorrichtung, nicht in die Verriegelungshaken der Verriegelungsarme eingreift/eingreifen.

In einer bevorzugten Ausgestaltungsform ist der Druckbehälter dadurch gekennzeichnet, dass bei einem Druck von 0 kPa im Inneren des Druckbehälters der Zentralkörper, in Richtung einer Zylinderachse des Außenkörpers, einen Abstand zu dem Außenkörper aufweist, der im Bereich von 1 mm bis 6 mm, bevorzugt 1,5 mm bis 5 mm, besonders bevorzugt 2 mm bis 4 mm, insbesondere 3 mm, liegt.

Ferner kann der Druckbehälter dadurch gekennzeichnet sein, dass bei einem Druck von 0 kPa im Inneren des Druckbehälters die Verriegelungsarme, in Richtung einer Zylinderachse des Außenkörpers, einen Abstand bis zu einem Ende der Aussparungen aufweisen, der im Bereich von 1 mm bis 6 mm, bevorzugt 1,5 mm bis 5 mm, besonders bevorzugt 2 mm bis 4 mm, insbesondere 3 mm, liegt.

In einer bevorzugten Ausgestaltungsform weist der Druckbehälter eine Feder auf, die mit dem Innenkörper der Verschlussvorrichtung verbunden ist und bei einem Druck von 4 kPa im Inneren des Druckbehälters eine Dehnung über eine Strecke erfährt, die im Wesentlichen einem Abstand vom Zentralkörper zum Außenkörper und/oder einem Abstand von den Verriegelungsarmen zum Ende der Aussparungen entspricht, bevorzugt eine Dehnungstrecke im Bereich von 1 mm bis 6 mm, bevorzugt 1,5 mm bis 5 mm, besonders bevorzugt 2 mm bis 4 mm, insbesondere 3 mm.

Es wird zudem die Verwendung der erfindungsgemäßen Verschlussvorrichtung zum Verschließen eines Druckbehälters, bevorzugt zum Verschließen eines Druckkochtopfs, vorgeschlagen.

Anhand der nachfolgenden Figuren soll der erfindungsgemäße Gegenstand näher erläutert werden ohne diesen auf die hier dargestellten, spezifischen Ausgestaltungsformen einschränken zu wollen.

Figur 1 zeigt eine im Stand der Technik bekannte Verschlussvorrichtung für einen Druckbehälter. Die Verschlussvorrichtung hat einen Zentralkörper 12, der eine optische Kochanzeige 9 und zudem zwei Verriegelungsarme 2, 2' enthält, die jeweils einen Verriegelungshaken 3, 3' an ihrem Ende aufweisen. Über einen Innenkörper 13 des Zentralkörpers 12 kann die bekannte Verschlussvorrichtung auf einen Druckbehälter (z.B. einen Schnellkochtopf) aufgebracht (z.B. aufgesteckt) werden.

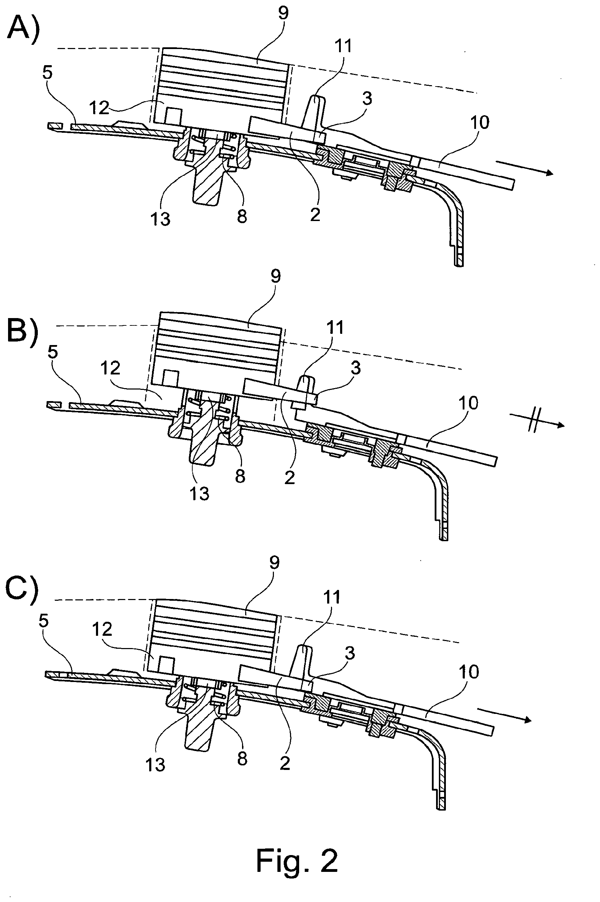

Figur 2 zeigt eine im Stand der Technik bekannte Verschlussvorrichtung, die auf einem Druckbehälter 5 aufgebracht ist. Mit dem Innenkörper 13 ist die Verschlussvorrichtung mit einer Feder 8 des Druckbehälters 5 verbunden, die eine Zugkraft in Richtung Druckbehälter 5 ausübt. Steht der Druckbehälter 5 nicht unter Druck bzw. ist der Innendruck des Druckbehälters 5 nur gering (siehe Figur 2A), sind die beiden Verriegelungshaken 3, 3' der beiden Verriegelungsarme 2, 2' des Zentralkörpers 12 nicht in die Anschlagkante 11 vom Ventilheber 10 des Druckbehälters 5 eingerastet und der Ventilheber 10 kann von der Verschlussvorrichtung gelöst werden (siehe Pfeil in Figur 2A). Übersteigt die Kraft des Innendrucks des Druckbehälters 5 die Rückstellkraft der Feder 5, so bewegt sich die Verschlussvorrichtung vom Druckbehälter 5 weg, bis ein Kräftegleichgewicht herrscht. Ist der Innendruck des Druckbehälters beispielsweise 4 kPa (siehe Figur 2B), so sind die beiden Verriegelungshaken 3, 3' der beiden Verriegelungsarme 2, 2' des Zentralkörpers 12 in die Anschlagkante 11 vom Ventilheber 10 des Druckbehälters 5 eingerastet und der Ventilheber 10 kann von der Verschlussvorrichtung nicht mehr gelöst werden (siehe durchgestrichener Pfeil in Figur 2B). Wird nun manipulativ in Richtung des Druckbehälters 5 eine Kraft auf den Zentralkörper 12 der Verschlussvorrichtung ausgeübt, welche der Kraft des Innendrucks im Druckbehälter 5 entgegenwirkt (siehe Figur 2C), so wird die Verschlussvorrichtung in Richtung Druckbehälter 5 bewegt. Im Extremfall geht die Bewegung der Verschlussvorrichtung so weit, dass die beiden Verriegelungshaken 3, 3' der beiden Verriegelungsarme 2, 2' des Zentralkörpers 12 der Verschlussvorrichtung nicht mehr in die Anschlagkante 11 vom Ventilheber 10 des Druckbehälters 5 einrasten und der Ventilheber 10 somit von der Verschlussvorrichtung gelöst werden kann (siehe Pfeil in Figur 2C). Ein solches Lösen kann eine Gefahr für den Benutzer des Druckbehälters darstellen.

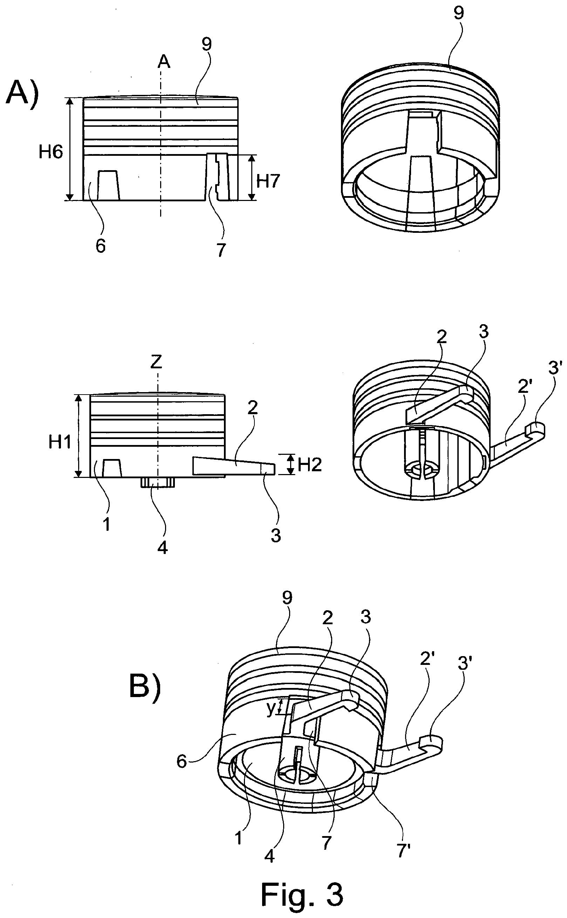

Figur 3 zeigt eine erfindungsgemäße Verschlussvorrichtung. Die erfindungsgemäße Verschlussvorrichtung hat einen Zentralkörper 1, der zwei Verriegelungsarme 2, 2' enthält, die jeweils einen Verriegelungshaken 3, 3' an ihrem Ende aufweisen. Über einen Innenkörper 4 des Zentralkörpers 1 kann die Verschlussvorrichtung auf einen Druckbehälter (z.B. einen Schnellkochtopf) aufgebracht (z.B. aufgesteckt) werden. Zudem enthält die Verschlussvorrichtung einen Außenkörper 6, der eine optische Kochanzeige 9 und zudem zwei Aussparungen 7, 7' aufweist. Der Zentralkörper 1 wird entlang seiner Zylinderachse Z und entlang einer Zylinderachse A des Außenkörpers 6 in den Außenkörper 6 eingebracht (z.B. eingesteckt), sodass die beiden Verriegelungsarme 2, 2' des Zentralkörpers 1 durch die beiden Aussparungen 7, 7' des Außenkörpers nach außen ragen (siehe Figur 3B). Hierbei ist die Höhe H7 der beiden Aussparungen 7, 7' um einen bestimmten Abstand Y größer als die Höhe H2 der beiden Verriegelungsarme 2, 2' an dieser Stelle. Im assemblierten Zustand besteht ein bestimmter Abstand zwischen der maximalen Höhe des Zentralkörpers 1 und der minimalen Höhe im Inneren (Innenraum) des Außenkörpers 6, gemessen in einer Richtung entlang der Zylinderachse A des Außenkörpers 6. Idealerweise ist der Abstand 1 mm bis 6 mm, insbesondere 3 mm.

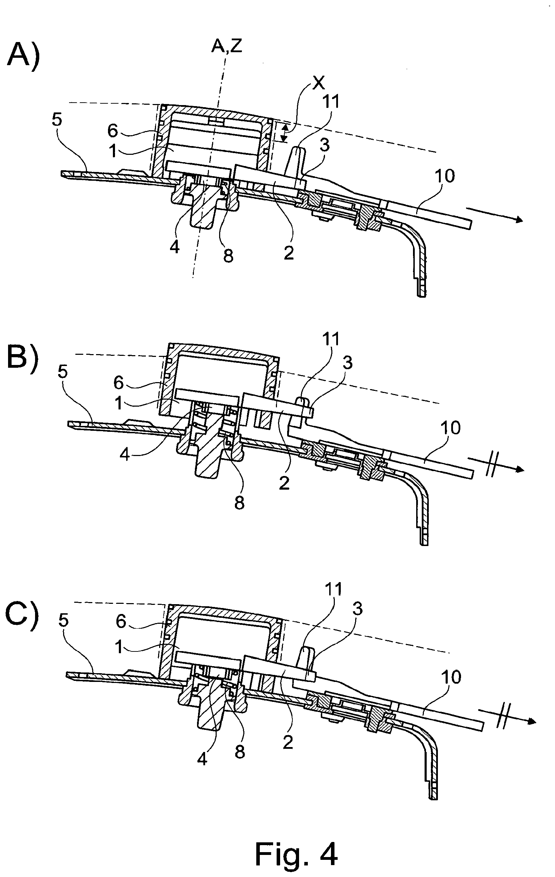

Figur 4 zeigt eine erfindungsgemäße Verschlussvorrichtung, die auf einem Druckbehälter 5 aufgebracht ist. Mit dem Innenkörper 4 ist die Verschlussvorrichtung mit einer Feder 8 des Druckbehälters 5 verbunden, die eine Zugkraft in Richtung Druckbehälter 5 ausübt. Steht der Druckbehälter 5 nicht unter Druck bzw. ist der Innendruck des Druckbehälters 5 nur gering (siehe Figur 4A), sind die beiden Verriegelungshaken 3, 3' der beiden Verriegelungsarme 2, 2' des Zentralkörpers 1 nicht in die Anschlagkante 11 vom Ventilheber 10 des Druckbehälters 5 eingerastet und der Ventilheber 10 kann von der Verschlussvorrichtung gelöst werden (siehe Pfeil in Figur 4A). Übersteigt die Kraft des Innendrucks des Druckbehälters 5 die Rückstellkraft der Feder 5, so bewegt sich die Verschlussvorrichtung vom Druckbehälter 5 weg, bis ein Kräftegleichgeweicht herrscht. Ist der Innendruck des Druckbehälters 5 beispielsweise 4 kPa (siehe Figur 4B), so sind die beiden Verriegelungshaken 3, 3' der beiden Verriegelungsarme 2, 2' des Zentralkörpers 12 in die Anschlagkante 11 vom Ventilheber 10 des Druckbehälters 5 eingerastet und der Ventilheber 10 kann von der Verschlussvorrichtung nicht mehr gelöst werden (siehe durchgestrichener Pfeil in Figur 4B). Wird nun manipulativ in Richtung des Druckbehälters 5 eine Kraft auf den Außenkörper 6 der Verschlussvorrichtung ausgeübt, welche der Kraft des Innendrucks im Druckbehälter 5 entgegenwirkt (siehe Figur 4C), so wird nur der Außenkörper 6 der Verschlussvorrichtung in Richtung Druckbehälter 5 bewegt. Durch den erfindungsgemäß vorgesehenen Abstand X zwischen der unteren Innenwand des Außenkörpers 6 und der oberen Außenwand des Zentralkörpers 1 (z.B. 3 mm) wird sichergestellt, dass nur der Außenkörper 6 bis zum Anschlag an die Oberfläche des Druckbehälters bewegt werden kann, aber die Bewegung des Zentralkörpers 1 der Verschlussvorrichtung nicht so weit gehen kann, dass die beiden Verriegelungshaken 3, 3' der beiden Verriegelungsarme 2, 2' des Zentralkörpers 12 nicht mehr in die Anschlagkante 11 vom Ventilheber 10 des Druckbehälters 5 einrasten (siehe durchgestrichener Pfeil in Figur 4C). Es ist somit auch im Falle einer Ausübung eines starken Drucks auf die Verschlussvorrichtung in Richtung Druckbehälter 5 sichergestellt, dass der Ventilheber 10 nicht von der Verschlussvorrichtung gelöst werden kann. Die erfindungsgemäße Verschlussvorrichtung ermöglicht somit eine höhere Sicherheit bei der Verwendung des Druckbehälters 5.

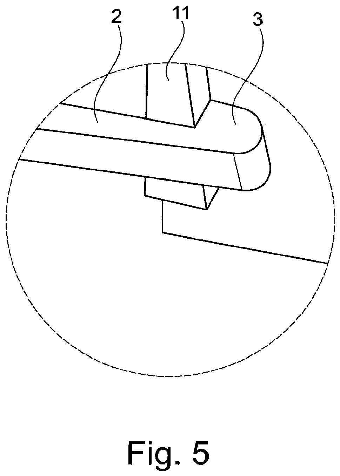

Figur 5 zeigt einen vergrößerten Ausschnitt eines Verriegelungsarms 2 mit Verriegelungshaken 3 einer erfindungsgemäßen Verschlussvorrichtung in der Situation aus Figur 4C. Trotz starkem Gegendruck auf den Außenkörper der Verschlussvorrichtung in Richtung Druckbehälter bleibt der Verriegelungshaken 3 in der Anschlagkante 11 des Ventilhebers des Druckbehälters 5 eingerastet und verhindert somit ein Entfernen des Ventilhebers.

### Bezugszeichenliste

- 1:: im Wesentlichen zylindrischer Zentralkörper;
- 2, 2':: Verriegelungsarm;
- 3, 3':: Verriegelungshaken;
- 4:: im Wesentlichen zylindrischer Innenkörper;
- 5:: Druckbehälter;
- 6:: im Wesentlichen zylindrischer Außenkörper;
- 7:: Aussparung in Außenkörper;
- 8:: Feder vom Druckbehälter;
- 9:: optische Kochanzeige;
- 10:: Ventilheber vom Druckbehälter;
- 11:: Anschlagkante vom Ventilheber;
- 12:: Zentralkörper einer Verschlussvorrichtung aus dem Stand der Technik;
- 13:: Innenkörper einer Verschlussvorrichtung aus dem Stand der Technik;
- A:: Zylinderachse des Außenkörpers;
- H1:: maximale Höhe des Zentralkörpers;
- H2:: Höhe Verriegelungsarme auf Höhe der Aussparungen am Außenkörper;
- H6:: minimale Höhe des Außenkörpers in seinem Inneren;
- H7:: Höhe der Aussparungen im Außenkörper;
- X:: Abstand von Zentralkörper zum Außenkörper in einer Richtung entlang der Achse des Außenkörpers (X = H6 - H1);
- Y:: Abstand vom Verriegelungsarm bis zum Ende der Aussparung im Außenkörper in einer Richtung entlang der Achse des Außenkörpers (Y = H7 - H2);
- Z:: Zylinderachse des Zentralkörpers.

## Patentansprüche

1. Verschlussvorrichtung für einen Druckbehälter, enthaltend
a) einen im wesentlichen zylindrischen Zentralkörper, der entlang einer Zylinderachse des Zentralkörpers eine bestimmte Höhe aufweist und an einer nach außen gerichteten Oberfläche zwei Verriegelungsarme aufweist, die jeweils einen Verriegelungshaken enthalten; und
b) einen im wesentlich zylindrischen Innenkörper, der mit dem Zentralkörper verbunden ist, zumindest bereichsweise innerhalb des Zentralkörpers angeordnet ist und dazu geeignet ist, auf eine Öffnung eines Druckbehälters aufgebracht zu werden;
wobei die Verschlussvorrichtung einen im wesentlichen zylindrischen Außenkörper enthält, und
i) der Außenkörper zumindest bereichsweise außerhalb des Zentralkörpers angeordnet ist;
ii) der Außenkörper mit dem Zentralkörper beweglich verbunden ist, sodass der Zentralkörper innerhalb des Außenkörpers in Richtung einer Zylinderachse des Außenkörpers beweglich ist;
**dadurch gekennzeichnet, dass**
iii) der Außenkörper Aussparungen aufweist, durch welche die Verriegelungsarme vom Zentralkörper durch den Außenkörper nach außen ragen; und
iv) der Außenkörper in Richtung einer Zylinderachse des Außenkörpers einen bestimmten Abstand (x) zum Zentralkörper aufweist und die Verriegelungsarme in Richtung der Zylinderachse des Außenkörpers mindestens diesen bestimmten Abstand (x) zu einem Ende der Aussparungen aufweisen.

2. Verschlussvorrichtung gemäß Anspruch 1, **dadurch gekennzeichnet, dass** der Abstand x
i) einer Dehnungsstrecke einer Feder eines Druckbehälters bei einem bestimmten Innendruck des Druckbehälters entspricht, bevorzugt einer Dehnungsstrecke einer Feder eines Druckbehälters bei einem Innendruck des Druckbehälters im Bereich von > 0 kPa bis < 4 kPa; und/oder
ii) einem Wert im Bereich von 1 mm bis 6 mm, bevorzugt 1,5 mm bis 5 mm, besonders bevorzugt 2 mm bis 4 mm, insbesondere 3 mm, entspricht.

3. Verschlussvorrichtung gemäß einem der vorhergehenden Ansprüche, **dadurch gekennzeichnet, dass** der Zentralkörper
i) einstückig mit dem Innenkörper ausgebildet ist; und/oder
ii) über eine Steckverbindung in den Außenkörper eingesteckt ist.

4. Verschlussvorrichtung gemäß einem der vorhergehenden Ansprüche, **dadurch gekennzeichnet, dass**, in Richtung einer Zylinderachse des Außenkörpers, der Außenkörper eine Höhe aufweist, die mindestens 2 mm, bevorzugt mindestens 3 mm, größer ist als die Höhe des Zentralkörpers in diese Richtung.

5. Verschlussvorrichtung gemäß einem der vorhergehenden Ansprüche, **dadurch gekennzeichnet, dass**, in Richtung einer Zylinderachse des Außenkörpers, die Aussparungen eine Höhe aufweisen, die mindestens 2 mm, bevorzugt mindestens 3 mm, größer ist als die Höhe der Verriegelungsarme in diese Richtung.

6. Verschlussvorrichtung gemäß einem der vorhergehenden Ansprüche, **dadurch gekennzeichnet, dass** die zwei Verriegelungsarme des Zentralkörpers
i) einstückig mit dem Zentralkörper sind; und/oder
ii) jeweils einstückig mit den Verriegelungshaken sind.

7. Verschlussvorrichtung gemäß einem der vorhergehenden Ansprüche, **dadurch gekennzeichnet, dass** der Außenkörper eine Kochanzeige aufweist.

8. Verschlussvorrichtung gemäß einem der vorhergehenden Ansprüche, **dadurch gekennzeichnet, dass** der
i) im wesentlichen zylindrische Zentralkörper einen Durchmesser im Bereich von 20 bis 35 cm, bevorzugt von 26 bis 28 cm, aufweist; und/oder
ii) im wesentlichen zylindrische Innenkörper einen Durchmesser im Bereich von 5 bis 11 cm, bevorzugt von 7 bis 9 cm, aufweist; und/oder
iii) im wesentlichen zylindrische Außenkörper einen Durchmesser im Bereich von 30 bis 45 cm, bevorzugt von 32 bis 36 cm, aufweist.

9. Druckbehälter, bevorzugt Druckkochtopf, enthaltend eine Verschlussvorrichtung gemäß einem der vorhergehenden Ansprüche.

10. Druckbehälter gemäß Anspruch 9, wobei die Verschlussvorrichtung gemäß einem der Ansprüche 1 bis 8 auf den Druckbehälter aufgebracht ist, bevorzugt über den Innenkörper der Verschlussvorrichtung auf den Druckbehälter aufgebracht ist.

11. Druckbehälter gemäß Anspruch 10, **dadurch gekennzeichnet, dass** der Druckbehälter einen oder mehrere Ventilheber mit jeweils mindestens einer Anschlagskante aufweist, wobei die Anschlagskante(n) so ausgestaltet sind, dass sie bei
i) einem Druck von ≥ 4 kPa im Inneren des Druckbehälters, und einem gleichzeitigen, entsprechenden Gegendruck von ≥ 4 kPa auf den Außenkörper der Verschlussvorrichtung, in die Verriegelungshaken der Verriegelungsarme der Verschlussvorrichtung eingreift/eingreifen; und/oder
ii) einem Druck von < 4 kPa im Inneren des Druckbehälters, und optional einem gleichzeitigen, entsprechenden Gegendruck von ≥ 4 kPa auf den Außenkörper der Verschlussvorrichtung, nicht in die Verriegelungshaken der Verriegelungsarme eingreift/eingreifen.

12. Druckbehälter gemäß einem der Ansprüche Anspruch 10 oder 11, **dadurch gekennzeichnet, dass** bei einem Druck von 0 kPa im Inneren des Druckbehälters der Zentralkörper, in Richtung einer Zylinderachse des Außenkörpers, einen Abstand zu dem Außenkörper aufweist, der im Bereich von 1 mm bis 6 mm, bevorzugt 1,5 mm bis 5 mm, besonders bevorzugt 2 mm bis 4 mm, insbesondere 3 mm, liegt.

13. Druckbehälter gemäß einem der Ansprüche Anspruch 10 bis 12, **dadurch gekennzeichnet, dass** bei einem Druck von 0 kPa im Inneren des Druckbehälters die Verriegelungsarme, in Richtung einer Zylinderachse des Außenkörpers, einen Abstand bis zu einem Ende der Aussparungen aufweisen, der im Bereich von 1 mm bis 6 mm, bevorzugt 1,5 mm bis 5 mm, besonders bevorzugt 2 mm bis 4 mm, insbesondere 3 mm, liegt.

14. Druckbehälter gemäß einem der Ansprüche 9 bis 13, **dadurch gekennzeichnet, dass** der Druckbehälter eine Feder aufweist, die mit dem Innenkörper der Verschlussvorrichtung verbunden ist und bei einem Druck von 4 kPa im Inneren des Druckbehälters eine Dehnung über eine Strecke erfährt, die im Wesentlichen einem Abstand vom Zentralkörper zum Außenkörper und/oder einem Abstand von den Verriegelungsarmen zum Ende der Aussparungen entspricht, bevorzugt eine Dehnungstrecke im Bereich von 1 mm bis 6 mm, bevorzugt 1,5 mm bis 5 mm, besonders bevorzugt 2 mm bis 4 mm, insbesondere 3 mm.

15. Verwendung der Verschlussvorrichtung gemäß einem der Ansprüche 1 bis 8 zum Verschließen eines Druckbehälters, bevorzugt zum Verschließen eines Druckkochtopfs.

## Claims

1. A closing device for a pressure vessel, comprising
a) an essentially cylindrical central body which, along a cylindrical axis of the central body, has a specific height and, on an outwardly directed surface, has two locking arms which respectively comprise a locking hook; and
b) a substantially cylindrical inner body that is connected to the central body, is arranged at least regionally within the central body, and is suitable to be applied onto an opening of a pressure vessel;
wherein the closing device comprises a substantially cylindrical outer body, and
i.) the outer body being disposed, at least in regions, outside the central body;
ii.) the outer body being movably connected to the central body so that the central body is movable within the outer body in the direction of a cylinder axis of the outer body; **characterized in that**
iii.) the outer body having recesses through which the locking arms protrude outwards from the central body through the outer body; and
iv.) the outer body having, in the direction of a cylindrical axis of the outer body, a specific spacing (x) to the central body, and the locking arms having, in the direction of the cylindrical axis of the outer body, at least this specific spacing (x) to one end of the recesses.

2. Closing device according to claim 1, **characterised in that** the spacing x
i.) corresponds to a stretching distance of a spring of a pressure vessel at a specific internal pressure of the pressure vessel, preferably a stretching distance of a spring of a pressure vessel at an internal pressure of the pressure vessel in the range of > 0 kPa to < 4 kPa; and/or
ii.) corresponds to a value in the range of 1 mm to 6 mm, preferably 1.5 mm to 5 mm, particularly preferably 2 mm to 4 mm, in particular 3 mm.

3. Closing device according to one of the preceding claims, **characterised in that** the central body
i.) is configured in one piece with the inner body; and/or
ii.) is inserted in the outer body via a plug connection.

4. Closing device according to one of the preceding claims, **characterised in that** the outer body, in the direction of a cylindrical axis of the outer body, has a height which is at least 2 mm, preferably at least 3 mm, greater than the height of the central body in this direction.

5. Closing device according to one of the preceding claims, **characterised in that** the recesses, in the direction of a cylindrical axis of the outer body, have a height which is at least 2 mm, preferably at least 3 mm, greater than the height of the locking arms in this direction.

6. Closing device according to one of the preceding claims, **characterised in that** the two locking arms of the central body
i.) are in one piece with the central body; and/or
ii.) are respectively in one piece with the locking hooks.

7. Closing device according to one of the preceding claims, **characterised in that** the outer body has a cooking display.

8. Closing device according to one of the preceding claims, **characterised in that** the
i.) essentially cylindrical central body has a diameter in the range of 20 to 35 cm, preferably of 26 to 28 cm; and/or
ii.) essentially cylindrical inner body has a diameter in the range of 5 to 11 cm, preferably of 7 to 9 cm; and/or
iii.) essentially cylindrical outer body has a diameter in the range of 30 to 45 cm, preferably of 32 to 36 cm.

9. Pressure vessel, preferably pressure cooker, comprising a closing device according to one of the preceding claims.

10. Pressure vessel according to claim 9, wherein the closing device according to one of claims 1 to 8 is applied on the pressure vessel, preferably is applied on the pressure vessel via the inner body of the closing device.

11. Pressure vessel according to claim 10, **characterised in that** the pressure vessel has one or more valve lifters with respectively at least one stop edge, the stop edge(s) being configured such that
i.) with a pressure of ≥ 4 kPa in the interior of the pressure vessel, and with a simultaneous corresponding counterpressure of ≥ 4 kPa on the outer body of the closing device, it/they engages/engage in the locking hooks of the locking arms of the closing device; and/or
ii.) with a pressure of < 4 kPa in the interior of the pressure vessel, and optionally with a simultaneous, corresponding counterpressure of ≥ 4 kPa on the outer body of the closing device, it/they does/do not engage in the locking hooks of the locking arms.

12. Pressure vessel according to one of claims 10 or 11, **characterised in that**, with a pressure of 0 kPa in the interior of the pressure vessel, the central body, in the direction of a cylindrical axis of the outer body, has a spacing to the outer body which is in the range of 1 mm to 6 mm, preferably 1.5 mm to 5 mm, particularly preferably 2 mm to 4 mm, in particular 3 mm.

13. Pressure vessel according to one of claims 10 to 12, **characterised in that**, with a pressure of 0 kPa in the interior of the pressure vessel, the locking arms, in the direction of a cylindrical axis of the outer body, have a spacing up to one end of the recesses which is in the range of 1 mm to 6 mm, preferably 1.5 mm to 5 mm, particularly preferably 2 mm to 4 mm, in particular 3 mm.

14. Pressure vessel according to one of claims 9 to 13, **characterised in that** the pressure vessel has a spring which is connected to the inner body of the closing device and, with a pressure of 4 kPa in the interior of the pressure vessel, experiences a stretching over a distance which corresponds essentially to a spacing of the central body to the outer body and/or to a spacing of the locking arms to the end of the recesses, preferably a stretching distance in the range of 1 mm to 6 mm, preferably 1.5 mm to 5 mm, particularly preferably 2 mm to 4 mm, in particular 3 mm.

15. Use of the closing device according to one of claims 1 to 8 for closing a pressure vessel, preferably for closing a pressure cooker.

## Revendications

1. Dispositif de fermeture pour un récipient sous pression, contenant
a) un corps central sensiblement cylindrique, qui présente une hauteur définie le long d'un axe de cylindre du corps central et présente, sur une surface dirigée vers l'extérieur, deux bras de verrouillage qui contiennent chacun un crochet de verrouillage ; et
b) un corps intérieur sensiblement cylindrique, qui est relié au corps central, est disposé au moins par zones à l'intérieur du corps central et est adapté pour être appliqué sur une ouverture d'un récipient sous pression ;
dans lequel le dispositif de fermeture comprend un corps extérieur sensiblement cylindrique, et
i.) le corps extérieur est disposé au moins par zones à l'extérieur du corps central ;
ii.) le corps extérieur est relié de manière mobile au corps central, de sorte que le corps central est mobile à l'intérieur du corps extérieur dans la direction d'un axe de cylindre du corps extérieur ; **caractérisé en ce que**
iii.) le corps extérieur présente des évidements à travers lesquels les bras de verrouillage font saillie vers l'extérieur depuis le corps central à travers le corps extérieur ; et
iv.) le corps extérieur présente, dans la direction d'un axe de cylindre du corps extérieur, une distance (x) définie par rapport au corps central et les bras de verrouillage présentent, dans la direction de l'axe de cylindre du corps extérieur, au moins cette distance (x) définie par rapport à une extrémité des évidements.

2. Dispositif de fermeture selon la revendication 1, **caractérisé en ce que** la distance x
i.) correspond à un trajet d'allongement d'un ressort d'un récipient sous pression à une pression interne définie du récipient sous pression, de préférence un trajet d'allongement d'un ressort d'un récipient sous pression à une pression interne du récipient sous pression dans la plage de > 0 kPa à < 4 kPa ; et/ou
ii.) à une valeur dans la plage de 1 mm à 6 mm, de préférence 1,5 mm à 5 mm, de manière particulièrement préférée 2 mm à 4 mm, en particulier de 3 mm.

3. Dispositif de fermeture selon l'une quelconque des revendications précédentes, **caractérisé en ce que** le corps central
i.) est réalisé d'un seul tenant avec le corps intérieur ; et/ou
ii.) est enfiché dans le corps extérieur par l'intermédiaire d'une liaison enfichable.

4. Dispositif de fermeture selon l'une quelconque des revendications précédentes, **caractérisé en ce que**, dans la direction d'un axe de cylindre du corps extérieur, le corps extérieur présente une hauteur qui est supérieure d'au moins 2 mm, de préférence d'au moins 3 mm, à la hauteur du corps central dans cette direction.

5. Dispositif de fermeture selon l'une quelconque des revendications précédentes, **caractérisé en ce que**, dans la direction d'un axe de cylindre du corps extérieur, les évidements présentent une hauteur qui est supérieure d'au moins 2 mm, de préférence d'au moins 3 mm, à la hauteur des bras de verrouillage dans cette direction.

6. Dispositif de fermeture selon l'une quelconque des revendications précédentes, **caractérisé en ce que** les deux bras de verrouillage du corps central
i.) sont d'un seul tenant avec le corps central ; et/ou
ii.) sont respectivement d'un seul tenant avec les crochets de verrouillage.

7. Dispositif de fermeture selon l'une quelconque des revendications précédentes, **caractérisé en ce que** le corps extérieur présente un témoin de cuisson.

8. Dispositif de fermeture selon l'une quelconque des revendications précédentes, **caractérisé en ce que** le
i.) corps central sensiblement cylindrique présente un diamètre dans la plage de 20 à 35 cm, de préférence de 26 à 28 cm ; et/ou
ii.) corps intérieur sensiblement cylindrique présente un diamètre dans la plage de 5 à 11 cm, de préférence de 7 à 9 cm ; et/ou
iii.) corps extérieur sensiblement cylindrique présente un diamètre dans la plage de 30 à 45 cm, de préférence de 32 à 36 cm.

9. Récipient sous pression, de préférence autocuiseur, contenant un dispositif de fermeture selon l'une quelconque des revendications précédentes.

10. Récipient sous pression selon la revendication 9, dans lequel le dispositif de fermeture selon l'une quelconque des revendications 1 à 8 est appliqué sur le récipient sous pression, de préférence est appliqué sur le récipient sous pression par l'intermédiaire du corps intérieur du dispositif de fermeture.

11. Récipient sous pression selon la revendication 10, **caractérisé en ce que** le récipient sous pression présente un ou plusieurs lève-vannes avec chacun au moins une arête de butée, dans lequel la ou les arêtes de butée (est)sont conçue(s) de telle sorte qu'elle(s) intervienne(nt) à
i.) une pression ≥ 4 kPa à l'intérieur du récipient sous pression, et une contre-pression correspondante simultanée ≥ 4 kPa sur le corps extérieur du dispositif de fermeture, s'insère/s'insèrent dans les crochets de verrouillage des bras de verrouillage du dispositif de fermeture ; et/ou
ii.) une pression < 4 kPa à l'intérieur du récipient sous pression, et éventuellement une contre-pression correspondante simultanée ≥ 4 kPa sur le corps extérieur du dispositif de fermeture, ne s'insère/s'insèrent pas dans les crochets de verrouillage des bras de verrouillage.

12. Récipient sous pression selon l'une quelconque des revendications 10 ou 11, **caractérisé en ce que**, à une pression de 0 kPa à l'intérieur du récipient sous pression, le corps central présente, dans la direction d'un axe de cylindre du corps extérieur, une distance par rapport au corps extérieur qui se situe dans la plage de 1 mm à 6 mm, de préférence 1,5 mm à 5 mm, de manière particulièrement préférée 2 mm à 4 mm, en particulier de 3 mm.

13. Récipient sous pression selon l'une quelconque des revendications 10 à 12, **caractérisé en ce que**, à une pression de 0 kPa à l'intérieur du récipient sous pression, les bras de verrouillage présentent, dans la direction d'un axe de cylindre du corps extérieur, une distance jusqu'à une extrémité des évidements qui se situe dans la plage de 1 mm à 6 mm, de préférence 1,5 mm à 5 mm, de manière particulièrement préférée 2 mm à 4 mm, en particulier de 3 mm.

14. Récipient sous pression selon l'une quelconque des revendications 9 à 13, **caractérisé en ce que** le récipient sous pression présente un ressort qui est relié au corps intérieur du dispositif de fermeture et subit, à une pression de 4 kPa à l'intérieur du récipient sous pression, un allongement sur un trajet qui correspond sensiblement à une distance du corps central au corps extérieur et/ou à une distance des bras de verrouillage à l'extrémité des évidements, de préférence un trajet d'allongement dans la plage de 1 mm à 6 mm, de préférence 1,5 mm à 5 mm, de manière particulièrement préférée 2 mm à 4 mm, en particulier de 3 mm.

15. Utilisation du dispositif de fermeture selon l'une quelconque des revendications 1 à 8 pour fermer un récipient sous pression, de préférence pour fermer un autocuiseur.
